# EUROPEAN PATENT APPLICATION

(11) **EP 2 260 983 A2**
(43) Date of publication of application: **15.12.2010**
(21) Application number: 10165274.1
(22) Date of filing: 08.06.2010
(51) Int. Cl.: B26D 1/00, G01M 19/00, B26D 1/03, B26D 7/10, B26D 7/26, B60S 1/38

(54) **Apparatus and method for precisely cutting an elastomer or rubber edge**

(30) Priority: 08.06.2009 GB 0909793
(71) Applicant: Promec bvba, 3300 Tienen (BE)
(72) Inventor: Ceulemans, Johan, B-3384 Glabbeek (BE)
(74) Representative: Bird, William Edward

(57) **Abstract**

The present invention presents a way to manufacture in particular high quality cutting edges of a wiping lip that are usually used in wiper blades to wipe windscreens of a car. Herein two converging knives (110,120) are used together to cut the elastomer or rubber edge (180,190) from two different sides which are opposing each other and thus during the cutting operation provide a low irregularity which is below 1 µm. High quality is achieved by lowering the temperature of the elastomer or rubber during the cutting operation.

In order to avoid a knife penetrating and breaking through the elastomer or rubber edge the knives are coupled and movable with respect to the elastomer or rubber edge in a transversal direction thereof such that a similar distributed and balanced force is exerted by the two knives on the respective side of the elastomer or rubber edge. Oscillating movements that may occur during fast cutting speeds are dampened by damping means in form of hydraulic or elastomeric of friction means.

Also a method for measuring and determining the quality of the finished elastomer or rubber edge (180,190) during a manufacturing process is provided wherein the wiping lip is pressed against a surface (525) with a certain force (555) and at the same time hot or cold gas is blown against the edge and using thermographic imaging means to determine the gas distribution that penetrates between the edge and the surface as a measure of quality.

## Description

### Field of the invention

The present invention relates to the cutting of elastomer or rubber edges of a wiping lip and in particular with a method and an apparatus for precisely cutting and optionally measuring the quality of the elastomer or rubber edges of the wiping lip. Such wiping lips are for instance used in wiper blades to wipe windscreens of many types of vehicles such as automobiles, trains, aircraft as well as in other applications such as in squeegee blades used in chemical processing. The present invention also relates to methods and apparatus for measuring the quality of elastomer or rubber edges of a wiping lip.

### Background of the invention

With the ever increasing number of produced cars, as well as the striving for efficiency in the production process of the cars and the associated components that are indispensable accessories of the cars, it is evident, that there is a huge interest in increasing the production yield of accessories and in particular of wiper blades. Although they do not contribute a major share to the cost of a car as they are often manufactured by separate providers from the point of view of an individual company an increased production yield of a wiper blade may well give the respective company a competitive advantage and determine also its long term survival.

In order to wipe the water off a windscreen without leaving stripes the operating edges, that is the wiping lip of the wiper blade that is in contact with the windscreen, needs to be straight.

Wiper blades are, generally produced from elastomer profiles, e.g. rubber materials, such as natural rubber or chloroprene rubber. In addition, wiper blades made of silicone rubber or polyurethane rubber are also known. Rubber is a so-called hyperelastic or super elastic material with an extremely small modulus (G and E). Elastomers also have a very a high percentage of elongation before fracture.

Wiper blade consists of a backside and a wiping lip. The wiping lip is flexibly attached to the backside so that the wiping lip easily can flip over when the wiper blade turns direction. The wiping lip has two operating edges that come separately and alternatively in contact with the windscreen.

At presence edges of rubber and in particular such edges of wiper blades as usually cut using rotating knives when finishing the blades. This is done by cutting a preformed element made of rubber in order to cut the operating edge that contacts the windscreen of a car for instance. Conventional processes manufacture a wiper blade at room temperature. The associated manufacturing process may however generate problems in terms of a production of the wiper blades with discontinuous edges which turn out to present irregularities (e.g. in the range of 4 to 5 µm) which are not acceptable from a production quality point of view. Wiper blades featuring distortions which are too large have to be eliminated from the production line. A greater problem even emerges when the wiper blades are (pre-) coated. The coating on the wiper blades has different mechanical properties e.g. hardness rises, than the rubber. This makes the cutting process unstable. Any discontinuity in the operating edge will result in an irregular water film on the windscreen. The water film is formed when the wiper blade moves over the windscreen. The greater the discontinuity of the operating edge, the greater the irregularity of the water film will be. The water film must be as thin as possible.

In the case of windscreen wiper blades, it is important that they are able to adapt as well as possible to the contour of the windscreen of the motor vehicle and remain flexible even at different temperatures.

At present the measurement of the conformity to production standards of the wiper blades is done manually with a fully assembled wiper blade. Ensuring the quality of wiper blades according to the present manufacturing process and according to the current quality standards is very expensive and not conclusive. Measuring the quality of the edge(s) remains a major problem. No standard procedure or automated test is known to ensure the quality. The only way to define the quality of the wiper blade is by wiping the windscreen with a fully assembled windscreen wiper and then see if the windscreen is properly wiped. Since the known method depends on the interpretation of the person who is performing the test and not on the quantitative determination of a quantity as a result of a measurement, a better solution is needed.

Furthermore the present production of wiper blades for cars is also a matter of environmental concern. In current internal production processes at presence the friction and also slip-stick effects during cutting off wiper blades in the manufacturing process is reduced by adding lubricant to the cutting edges which leeches chloride out of the rubber that subsequently produces chloric acid HCl in contact with water. On the other hand to ease the friction problem also graphite as lubricant can be used which in turn may cause a dust and dirt problem in the production and may require costly filtering procedures in order to clean the air to maintain safety standards and to avoid excess pollution.

In some areas of rubber manufacturing for instance at the cutting of stamps another approach is taken. The document JP 05031874 which is a published Japanese patent application titled "Rubber stamp production device" discloses to cool down the rubber in a specific chamber by for instance a Peltier element and to cut the rubber stamp in a cooled chamber by use of two cutters one being a roughly machining cutter and another one being a finishing cutter shown at Fig. 3 of this document with reference numerals 50 and 52. At Fig. 5 also the same document shows a nozzle 78 that sprays vaporized gas from liquefied nitrogen 76 that is used to cool down the rubber stamp material 24, the stamp is made of. In this document neither quality constraints in terms of precisely to be manufactured edges are an issue nor tolerances are given therefore. In addition, no particular temperature ranges are given. In addition, a stamp that usually has to represent graphic symbols does not have to follow such stringent quality and tolerance constraints as it is with wiper blades that need to remove water without leaving an irregular film on the windscreen from a car and much have to contribute to the safety of securely driving a car in today's traffic under bad weather conditions.

None other prior art documents in the area rubber edge cutting disclose any solutions to solve the raised problems, which remain unsolved.

### Summary of the Invention

It is a first object of the present invention to provide an improved apparatus and method for precisely cutting elastomer or rubber edges of a strip of elastomer or rubber such as a strip having a wiping lip as well as to the provision of improved wiper blades. It is a separate independent second object of the present invention to provide an apparatus and method for quality control of elastomer or rubber edges of a strip of elastomer or rubber such as a strip having a wiping lip. An advantage of the present invention is that it can deliver a much better production yield in terms of finished elastomer or rubber edges that meet the constraints of the production process parameters in higher numbers in terms of production yield in comparison to the present processes.

The first object is achieved for an apparatus for precisely cutting elastomer or rubber edges of a strip e.g. having a wiping lip according to independent claim 1 and for a method for precisely cutting elastomer or rubber edges of a strip, e.g. having a wiping lip according to independent claim 11. Further developments of the invention are claimed in the dependent claims.

The present invention is based at least in part on the realisation that fluctuations of the cutting forces in elastomer or rubber occurs as a result of the accumulation and release process of elastomer or rubber internal energy during cutting. As a result of these fluctuations discontinuities like gaps, changing angles, changing heights and/or a burr at the operating edge during cutting can occur.

Apparatus according to the present invention presents the advantage, that two knives cut from different sides of the strip such as a wiping lip while not totally penetrating the elastomer or rubber and perform this cutting process on edge of a strip such as on a wiping lip, or at least on the part of the wiping lip that needs to be cut, that has been cooled down and as such is more stiff. This allows for a cleaner cut. Therefore, a high quality cut during the finishing of the elastomer or rubber edge can be achieved and in particular high quality wiper blades having significantly smaller irregularities, smaller than 4 to 5 µm, preferably smaller than 2 to 3 µm and more preferably smaller than 1 µm will be the result of this cutting process. The bottom edge of the wiping lip is preferably blunt, i.e. there is a small land of elastomer or rubber between the two cuts.

Advantageously a further development of the apparatus according to the invention presents the advantage, that while two different knives are facing each other and have converging blades a clean cut can be achieved when the relative movement between the knife and the wiping lip is taking place which can either be achieved by moving the wiping lip or on the other hand by moving the cutting knives or both. Due to the inclined arrangement of the knife with respect to the wiping lip a clean and smooth cut can be achieved also when high cutting speeds are used during the manufacturing process as each edge from a different side of the wiping lip enters the elastomer or rubber smoothly to perform its individual cut.

Beneficially the two knives of a further development of the apparatus according to the present invention are located in two parallel planes of extension and the relative movement of the wiping lip is performed in a plane parallel to the respective planes of extension, whereby a smooth wiping lip can be produced which also has the benefit to be located in a single plane. Thereby a height of the elastomer or rubber edge with respect to a referential plane can be easily maintained.

Beneficially according to a further development of the embodiment of the apparatus according to the present invention the two planes of extension may lie in the same plane parallel to the plane where the relative movement is performed and thus a small and compact cutting configuration can be presented.

Expediently, according to a further development of the apparatus according to the embodiment of the present invention the force exerted from the cutting knives to the respective opposing sides of the wiping lip can be balanced. Thereby fluttering or breaking of the stiffer elastomer or rubber at lower temperature can reliably be avoided and it can also be guaranteed, that the cuts from both sides have a similar dimension as well as the use and wear regarding the individual knives on the left and right side in cutting the wiping lip are very similar.

Beneficially an appropriate means for balancing the force between the two knives is to couple the knives and make them movable around a pivot axis in a transversal direction with reference to the movement of the wiping lip that is to be cut because then if the force from one side on the first knife is too high the cutting configuration readily moves transversal to the elastomer or rubber edge to give in to the force which on the other hand causes the coupled second knife on the other side to experience a higher force thus the cutting configuration according to this principle is self-balancing when taking the additional fact into account, that beneficially the rotating shaft is located in line and preferably in front of the cutting zone with reference to a relative movement between the cutting knives and the wiping lip which causes the configuration to self stabilize.

Beneficially according to a further development of the embodiment of the apparatus according to the present invention the transversal movement around the pivot axe can be limited by guiding which prevents the knives penetrating too deep into the elastomer or rubber. These guides can be mounted on a parallel plane to the cutting plane(s).

Beneficially according to a further development of the embodiment of the apparatus according to the present invention the movement of the cutting configuration around a rotating shaft is dampened by friction means or elastomeric elastomer or rubber or hydraulic means in order to avoid fluttering of the cutting knives during a high speed cutting operations which may be caused by the stiffness of the elastomer or rubber at low temperatures. In this case the elastomer or rubber cannot adapt to the cutting force in a resilient manner and thus provokes continuous movements of the knives in either direction sideward of the elastomer or rubber edge which is to be cut.

Advantageously according to a further development of the embodiment of the apparatus according to the present invention in order to generate the relative movement the apparatus comprises means for fixing at least the wiping lip and thus a plurality of wiping lips can be maintained during the manufacturing while at a cutting station a knife configuration may be moved along the wiping lip to furnish it with the finishing cut.

Beneficially according to a further development of an embodiment of the apparatus according to the present invention it comprises means for automatically checking the quality of the produced wiping lip. Such means can include blowing gas or gases between the cut elastomer or rubber edge and a surface of a substrate which is pressed against the cut elastomer or rubber edge. Optionally, a parameter of the gas, e.g. the temperature, the distribution or the amount of gas that penetrates between the edge and the surface as a measure of quality can be measured or suitably estimated. Any gas or mixture of gas known by the person skilled in the art and that are suitable for such operation can be used. Preferably, the gas will be blown from the side opposite from the one where the wiping lip is bent, i.e. the gas is blown from the side where a bent portion of the wiping lip is directly in contact with (i.e. lying on) the surface.

Thus no manual quality determination has to be performed and no time delay occurs during manufacturing as well as the efficiency of the manufacturing process is increased.

Of particular advantage is a further embodiment of the present invention where the wiping lip is part of a wiper blade because in this manner wiper blades can be automatically manufactured with high quality and a higher production yield can be achieved in combination with an automatic quality control.

The present invention also relates to an apparatus and method for automatically checking the quality of an elastomer or rubber edge of an elastomer or rubber rubber e.g. forming a wiping lip. Such apparatus or method can include blowing gas or gases between the elastomer or rubber edge and a surface of a substrate which is pressed against the elastomer or rubber edge. Optionally, a parameter of the gas, e.g. the temperature, the distribution or the amount of gas that penetrates between the edge and the surface as a measure of quality can be measured or suitably estimated. Any gas or mixture of gas known by the person skilled in the art and that are suitable for such operation can be used. Preferably, the gas will be blown from the side opposite from the one where the strip edge or wiping lip is bent, i.e. the gas is blown from the side where a bent portion of the wiping lip is directly in contact with (i.e. lying on) the surface.

Thus no manual quality determination has to be performed and no time delay occurs during manufacturing as well as the efficiency of the manufacturing process is increased.

Of particular advantage is a further embodiment of the present invention where the wiping lip is part of a wiper blade because in this manner wiper blades can be automatically manufactured with high quality and a higher production yield can be achieved in combination with an automatic quality control.

The wiper blade according to the present invention can be used for a variety of applications including wiper blades for windscreens of automobiles, trucks, trains, aircraft, etc. or in chemical processing as a squeegee blade.

The method of the present invention presents the significant advantage, that a wiping lip is cooled down and easily cut from two sides by means of converging knives as the cooled elastomer or rubber can be better cut and delivers cleaner cutting edges when two knives from different sides are used to perform the cut that at the same time do not totally penetrate the elastomer or rubber.

Expediently according to a further development of the method according to the present invention the two knives used to cut the elastomer or rubber edge are coupled and allowed to move in a direction transversal to the direction of the relative movement of the wiping lip and the cutting knives. Thus a technically elegant means to balance and at the same time distribute the force that is exerted by the two knives on the elastomer or rubber edge from each respective and opposing cutting side during the cutting process is provided.

In a particular advantageous manner according to a further development of an embodiment of the method according to the present invention the movement of the knives in the transversal direction with regard to the elastomer or rubber edge is dampened in order to avoid fluttering and oscillations of the knife configuration which may occur due to the hardened nature of the cool elastomer or rubber that is not capable of resiliently adapting to the cutting force as it would with normal room temperature and thus causes the knifes to perform an oscillating movement at higher cutting speeds.

### Brief Description of the Drawings

Below the invention is further explained by way of examples and embodiments that are shown in drawings, wherein
Fig. 1 shows an enlarged example of a cutting configuration,
Fig. 2 shows details of an embodiment of the apparatus observed from an inclined view from below,
Fig. 3 shows an example of an embodiment of an apparatus according to the information to illustrate the possibility of moving knives,
Fig. 4 shows a mechanism for moving a plurality of wiping lips during various stations in a manufacturing process, and
Fig. 5 shows an enlarged view of an example of an embodiment of the apparatus according to the present invention according to which an automatic quality control can be performed.

### Description of the illustrative embodiments of the present invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

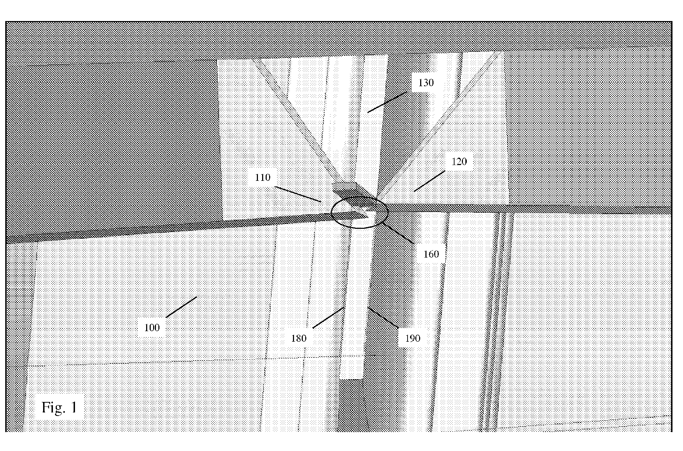

Fig. 1 shows an enlarged view of a cutting configuration of an apparatus according to the present invention 100. In particular Fig. 1 depicts a first knife 110 and a second knife 120. Also identified is rubber or elastomer strip and a wiping lip 130. The wiping lip is cut by knives 110 and 120 along a first elastomer or rubber edge 180 and a second elastomer or rubber edge 190 which are located in a cutting zone 160. A direction of relative movement between the first knife 110 and the second knife 120 and the elastomer or rubber edges 180 and 190 is indicated by 150 towards the bottom of the drawing. As can be seen the first knife 110 has a first plane of extension and the second knife 120 has a second plane of extension which are substantially parallel to each other and to the direction of relative movement of the elastomer or rubber edges 180 and 190. It can further be seen that in the cutting zone 160 both knives 110 and 120 are very close to each other so that the first plane of extension and the second plane of extension may lie in the same common plane or the planes may have a small distance.

Fig. 1 also shows that knife 1 and knife 2 have blades that are located towards the elastomer or rubber edges that has to be cut which here is illustrated as a wiper blade 130 having an elastomer or rubber edge 180. It can further be seen that both knives converge towards the cutting zone 160 which means that the cutting blades of each respective knife form an angle with each other and are not running in parallel.

By this configuration a smooth cut along the cutting edges 180 and 190 by each respective knife can be achieved as during the relative movement an inclined cut by each respective knife is performed with regard to the wiping lip 130. Such a cut delivers a clean straight edge having only small irregularities, e.g. significantly smaller than 4 to 5 µm, in case the elastomer or rubber is cut at a lower temperature. The configuration of the respective knives also resembles a scissor configuration. Using such a configuration the elastomer or rubber is penetrated from two sides but not totally and thus a breaking out of the material is avoided. Preferably two stable, fixed knives are used in order to perform a clean cut. Obviously there will be tradeoffs between the redress life for the knife and the temperature, respectively stiffness property of the elastomer or rubber. The harder the elastomer or rubber, the higher will be the wear of the respective knife and thus its associated lifetime. These relations will result in an optimum temperature in terms of production yield cutting accuracy and knife lifetime.

This embodiment of the present invention securely avoids at least one disadvantage of manufacturing processes of the present art in which knives are used that cause irregularities, e.g. due to the wear of the knives. Turning knives can be used with embodiments of the present invention in order to prolong the lifetime of the knives but the quality of the cut will decrease since every rotating knife will have a minor axial displacement.

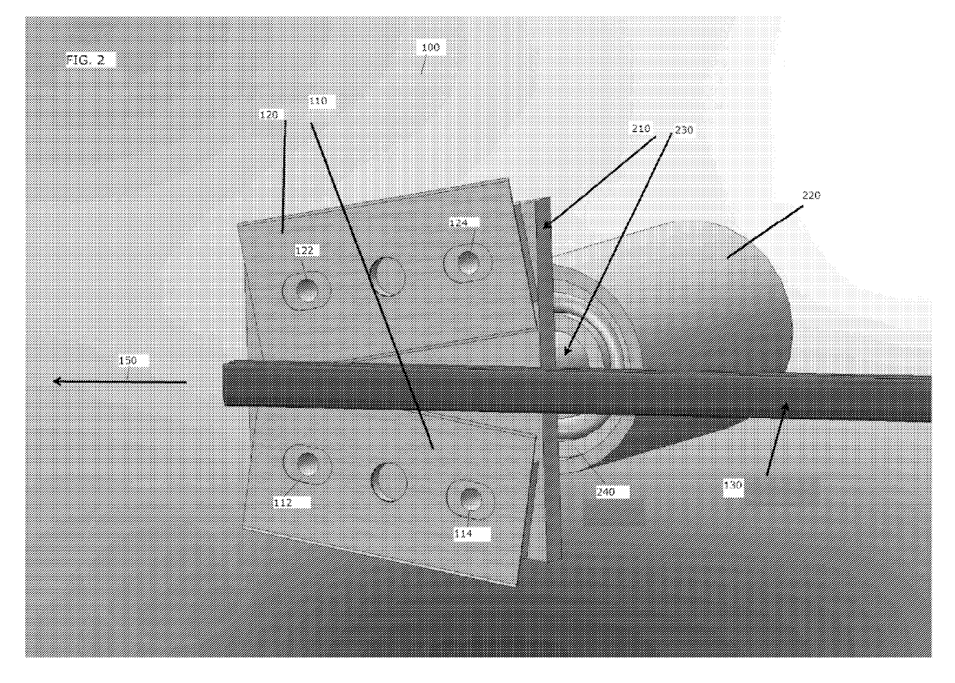

Fig. 2 shows a side view of a detail of an embodiment of the apparatus according to the present invention. As previously, the direction of relative movement 150 is marked and for the same parts of the configuration the same reference numerals are used and duplicate description thereof is omitted.

Here it can be seen, that the first knife 110 and the second knife 120 are secured to a socket 210 by first and second fixing means 112 and 114 used to secure the first knife and third and fourth fixing means 122 and 124 used to secure the second knife to the socket. Further it can be recognized, that the socket is attached to a movable shaft which is rotatably fixed inside of a mounting 220. For instance, the mounting comprises a ball bearing to securely bear the rotating shaft carrying the socket and the blades. The longitudinal centre axis of the rotating shaft defines a pivot axis of the rotating shaft around which the socket with the attached knifes may turn. Further the rotating shaft may be associated to a damping means to damp rotating oscillation of the rotating shaft caused by forces exerted from the stiff elastomer or rubber to the first and the second knife 110, 120 during movement along the elastomer or rubber edges. Here the stiff elastomer or rubber is not capable of resiliently compensating and following the cutting force exerted by the respective inclined knives and causes counterforces which push the knives in transversal directions to the wiping lip 130. This causes oscillating rotating movements at the rotating shaft 230 that need to be dampened either by elastomeric, hydraulic or friction means in order to be able to provide a clean cut along the elastomer or rubber edge also when facing high cutting speeds during a manufacturing process. As opposed to common manufacturing processes where non-frozen elastomer or rubber will set itself elastically into a position which is in dynamic balance with regard to a knife, in case of the embodiment of the present invention when the force on the one side of the wiping lip is higher than on the other side the wiping lip tends to move to the side with lesser applied force and vice versa taking the scissor configuration into account. Considering however the frozen wiping lip, then the elasticity of the elastomer or rubber is drastically reduced and it is not capable of providing a dynamic balance in itself. In an extreme case this could cause one knife to penetrate too deeply into the frozen elastomer or rubber and to break out on the other side thus providing an undesired cut quality. Therefore, the present invention in this embodiment provides movable knives which are able to follow movements of the wiping lip and are in a dynamic balance in terms of automatically stabilizing and exerting the same force from the left and from the right side to the wiping lip.

In this case it is also important, that the point of rotation of the rotating shaft lies in line and preferably in front of the cutting zone in case the cutting configuration is pushed or pulled in a direction along the wiping lip in order to self stabilize. On the other hand with high cutting speeds during a manufacturing process the elastomer or rubber may cause an oscillating movement when it is stiff and not resilient being in a frozen configuration. Thus oscillating movements of the cutting knives may deliver undesired cutting quality and need to be stabilized by damping the rotating movement. In this manner the knives are always positioned symmetrically with respect to a wiping lip to be cut e.g. a wiper blade. Preferably the range of temperature that is maintained during the manufacturing process of the present invention and in the cutting apparatus according to the present invention ranges from -30 to -80 °C or even lower depending on the additives used to form the elastomer. According to the experience made with experiments using the apparatus and embodiments of the present invention a temperature not lower than 20 °C below glass transition temperature and not higher than 20 °C above glass transition temperature tend to deliver a regular cutting result in the area of 1 µm.

This apparatus and method accordingly provide high quality cut elastomer or rubber edges (e.g. with irregularities of less than 1 µm) and in addition the total process does not require any lubricant and is more environmentally friendly. It is especially to be avoided, that the temperature is getting to low, e.g. more than 30°C below glass transition temperature where the elastomer or rubber turns brittle and the tendency that irregularities of large size occur during cutting is rising.

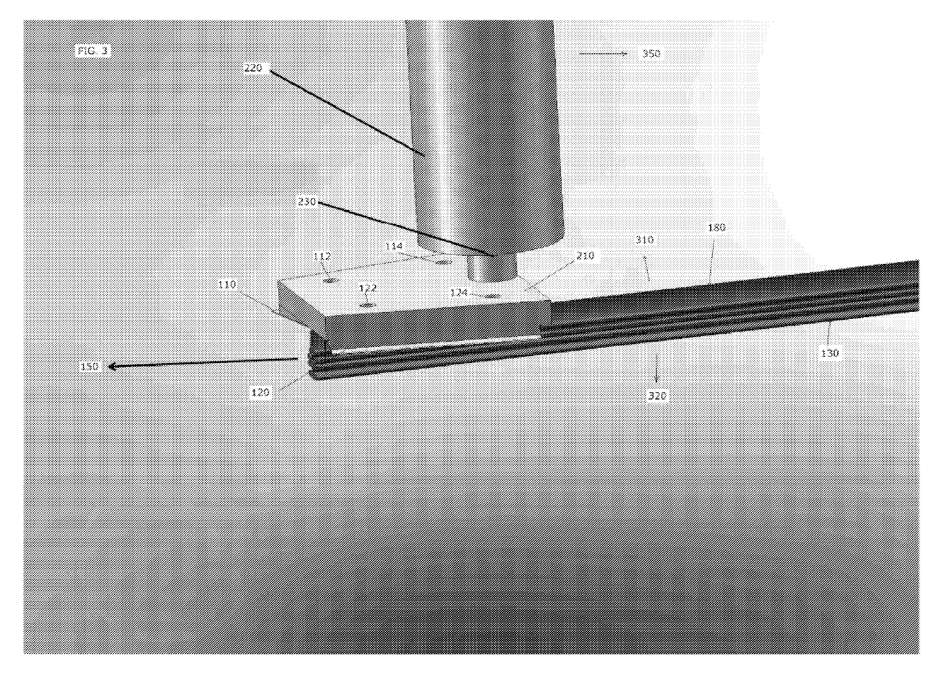

Fig. 3 shows another view from the side of the apparatus and the cutting configuration. Here in addition the direction of relative movement 150 and 350 can be identified and the fixing means for the respective blades can be seen located on the other side of the socket 210 as demonstrated in Fig. 2 for fixing the first and the second knife 110 and 120. In this case it may be required to guide the wiping lip stably along during the cutting process. In Fig. 3 clearly a symmetrical rotating point around the rotating shaft 230 with regard to the fixing means of the respective knives can be identified.
Fig. 3 also shows directions 310 and 320 transversal to the wiping lip and a direction of relative movement into which the first knife 110 and the second knife 120 may respectively pushed by the wiping lip when cutting it during the cutting operation as cooled down elastomer or rubber is stiffer and may not adapt resiliently to the force of a respective knife.

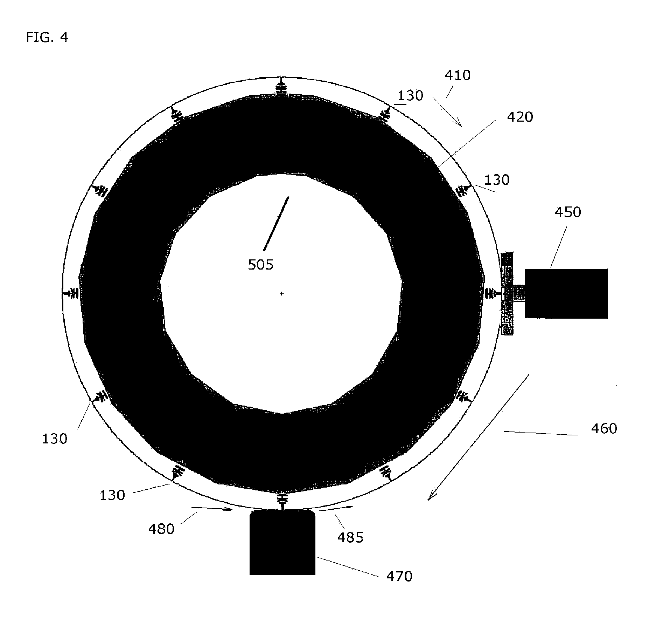

Fig. 4 shows an example of an embodiment according to the present invention in a manufacturing environment. For instance, here a moving mechanism that is also used for securing wiping lip 130 which is implemented as a carousel 505 is shown. Further for instance a cutting station 450 is shown (which is more clearly described with respect to Figs. 1 to 3) as well as a quality check mechanism 470 can be recognized. For instance, the apparatus according to this implementation comprises cooling means 420 which on the path 410 in a rotating fashion towards the cutting station 450 cool down the elastomer or rubber edges to a desired temperature. After the cutting station 450 subsequently the wiping lips are warmed up at 460 to about 0° C where they end up at the quality check station where an automatic quality check is performed.

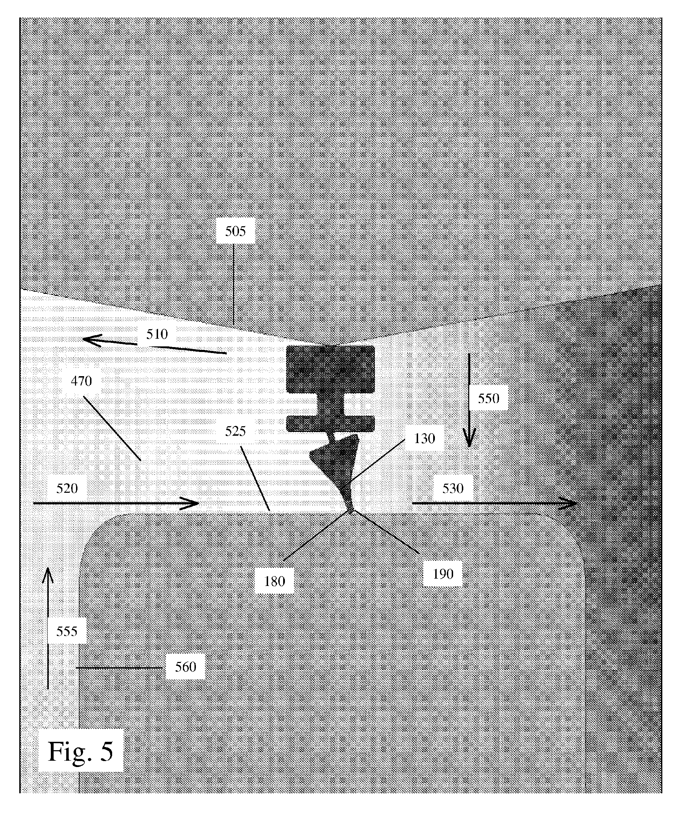

Fig. 5 shows a detailed view of the quality check station 470 according to Fig. 4, Here this quality check station is implemented as having a piston 560 which has a surface 525 which can be flat or curved i.e. concave or convexe. The wiping lip 130 is secured to the carousel 505 which moves along a direction of an arrow 510. From the left side of the drawing gas 520 is blown against the wiping lip and in particular to the elastomer or rubber edge 180 which is aligned to the surface 525 of the piston 560 which is pressed with a certain force which is predefined and indicated by 555 against the finished elastomer or rubber edge 180. On the other side the amount of escaping gas is measured or estimated at 530 to determine the quality of the finished elastomer or rubber edge. The evaluation of the second elastomer or rubber edge 190 of the wiping lip 130 follows the same principle and can be done by moving and/or rotating the surface 525. When moving and/or rotating the surface 525 to the opposite side, the wiping lip 130 will bent to the other side and the other elastomer or rubber edge 190 will touch the surface 525. The evaluation of the elastomer or rubber edge 190 of the wiping lip 130 can be performed by using the same check station 470.

Surface 525, for example, can be provided by a substrate which is a smooth glass block and there against the wiping lip while gas is blown against the finished elastomer or rubber edge from the left side. The penetrating gas is detected on the right side. The force that is exerted between the surface 525 and the elastomer or rubber edge 180 or the elastomer or rubber edge 190 may be adapted to the actual force that is used during wiping off a windscreen on a car or for application as a squeegee blade, for example.

To adjust the force, there is means (not shown) for regulating and controlling the force by which the surface is pressed against the operating edge. It is possible to evaluate the wiping action by pressing the operating edge against the surface.

The surface 525 preferably contains black body properties and the material which is used to make the surface has preferably a low heat capacity and has preferably a good heat transfer coefficient with the used gas. Further the surface is preferably isolated to prevent heat loss by conduction. The lower the heat capacity of the surface, the faster the temperature of the surface will change when a gas flows over it. Further, the start temperature of the surface has to be preferably equally low or high. The lower or higher the temperature of the surface, the faster the temperature will rise or fall due to thermal convection.

There is also means (not shown) for regulating and controlling the dynamic and static pressure, i.e.Ptot=Pdyn+Pstat, of the gas which is preferably equally distributed over the edge to be controlled.

The measurement of the gas distribution that penetrates between the edge and the surface is an estimation of the quality, because any discontinuity in the operating edge will lead to an irregular gas distribution at the other side of the operating edge. A good quality of the cutting is obtained when the cut of the wiping lip is straight, resulting in a limited amount of gas, which escapes between the edge and the surface.

The measurement of the gas distribution can be performed by blowing hot or cold gas. The hot or cold gas which penetrates between the operating edge and the pressed surface will heat or cool the surface at the other side of the edge by convection. This heated or cooled surface will radiate more or less infrared light which can be detected by a thermografic camera. Any irregularity in the distribution of the penetrated gas will irregular heat or cool the surface which can advantageously be detected by the thermografic camera.

## Claims

1. Apparatus (100) for precisely cutting elastomer or rubber edges (180, 190) comprising
- a first knife (110) for cutting the elastomer or rubber edge (180) from a first side of a rubber or elastomer strip,
- a second knife (120) for cutting the elastomer or rubber edge (190) from a second side opposite of the first side of the rubber or elastomer strip,
- means for cooling (420) at least that part of the rubber or elastomer strip which has to be cut,
- means for generating a relative movement (150, 350) between the first and
second knives (110, 120) and the rubber or elastomer strip,
whereby the cooled rubber or elastomer strip is cut by the first and second knifes (110, 120) during the relative movement (150, 350) of the first (110) and second (120) knifes and the rubber or elastomer strip to each other.

2. Apparatus (100) according to claim 1, where a blade of the first knife (110) and a blade of the second knife (120) are converging to each other.

3. Apparatus (100) according to any of the previous claims, wherein the first knife (110) is located in a first plane of extension and the second knife (120) is located in a second plane of extension,
wherein the first and the second planes of extension are parallel to each other;
and wherein the means for generating the relative movement (150, 350) are adapted to generate the relative movement in a third plane parallel to the first and second planes of extension.

4. Apparatus (100) according to claim 3, wherein the first and the second planes of extension lie in one plane.

5. Apparatus (100) according to any of the previous claims further comprising:
means for balancing a force (210, 230) exerted by the elastomer or rubber edge (180) on the first knife (110) and the elastomer or rubber edge (190) on the second knife (120).

6. Apparatus (100) according to claim 5, wherein the means for balancing the force (210, 230) comprise a socket (210) to which the first knife (110) and the second knife (120) are secured; and
a rotating shaft (230) having a pivot axis around which the socket is able to rotate freely.

7. Apparatus (100) according to claim 6, wherein the rotating shaft (230) is located in line and in front of a cutting zone (116) with respect to a direction of a movement of the elastomer or rubber edge (180) caused by the means (150, 350) for generating relative movement relative to the rotating shaft (230).

8. Apparatus (100) according to any of the previous claims, comprising means (220) for damping an oscillation of the first (110) and second (120) knife caused by an interaction of the knives (110, 120) with the elastomer or rubber edges (180,190).

9. Apparatus (100) according to any of the previous claims comprising means for fixing (505) at least the rubber or elastomer strip.

10. Apparatus (100) according to claim 9, comprising means (470) for checking the quality of the elastomer or rubber edges (180,190) determining the penetration of gas (530) between the elastomer or rubber edges (180,190) and a surface (525) which is pressed by a defined force (555) against the rubber or elastomer strip.

11. Method for precisely cutting elastomer or rubber edges (180, 190) comprising the following steps:
- cooling at least the part of the elastomer or rubber edges (180, 190) of a rubber or elastomer strip to be cut at a temperature below -30°C.
- moving relatively to each other (150, 350) the rubber or elastomer strip and two converging knives (110, 120) and thereby precisely cutting the elastomer or rubber edges (180,190) of the rubber or elastomer strip.

12. Method according to claim 11, wherein the knives (110, 120) are coupled and allowed to move transversal to a direction of the relative movement of the rubber or elastomer strip and the knives (110, 120).

13. Method according to claim 12, wherein the movement of the knives (110, 120) is damped against oscillation.

14. Method according to any of the claims 11 to 13, wherein the quality of the elastomer or rubber edges (180,190) are examined by blowing gas against each elastomer or rubber edge of the rubber or elastomer strip which is pressed by a defined force (555) against a surface (525).

15. Apparatus for checking the quality of elastomer or rubber edges (180,190) of a rubber or elastomer strip comprising means for determining penetration of gas (530) between the elastomer or rubber edges (180,190) and a surface (525) which is pressed by a defined force (555) against the rubber or elastomer strip.
